# EUROPEAN PATENT SPECIFICATION

(11) **EP 2 867 865 B1**
(45) Date of publication and mention of the grant of the patent: **03.03.2021**
(21) Application number: 13739599.2
(22) Date of filing: 27.06.2013
(51) Int. Cl.: G07B 15/00, G07C 9/00, B60R 25/20

(54) **MANAGEMENT SYSTEM FOR THE SHARED USE OF VEHICLES**
VERWALTUNGSSYSTEM ZUR GEMEINSAMEN NUTZUNG VON FAHRZEUGEN
SYSTÈME DE GESTION POUR L'UTILISATION PARTAGÉE DE VÉHICULES

(30) Priority: 02.07.2012 BE 201200450
(43) Date of publication of application: 06.05.2015
(73) Proprietor: OTA keys S.A., 1050 Brussel (BE)
(72) Inventor: GRONDEL, Harold, B-1050 Brussel (BE); CARDINAEL, Thibaut, B-1050 Brussel (BE)
(74) Representative: Theunis, Patrick
(86) International application number: PCT/BE2013/000034
(87) International publication number: WO 2014/005200

(56) References cited:
- WO-A1-2010/144490
- WO-A1-2011/053357
- WO-A2-2010/106413
- FR-A1- 2 801 994
- US-A1- 2005 009 511

## Description

### Field of the invention

The present invention relates to a management system for the shared use of vehicles by key virtualization on a wireless electronic apparatus.

### Background of the invention

For various reasons there is a growing need for the sharing of vehicles by various users, or the sharing of vehicles to more than one user.

A known problem in this context is the administration that is required for keeping the data relating to the availability of the vehicles, the desired periods of use of the users, the settlement of the fixed and variable costs, as well as the verification of the status of the vehicles, for example in connection with damages resulting from possible accidents.

In the past various solutions have been developed to meet the above goal, but up to now none of these solutions is considered as being satisfactory.

One of these solutions is for example the concept as published in the international PCT-patent application of the company Getaround, WO 2011/053357 A1, published on May 5th, 2011.

According to the information available on the website of Getaround (www.getaround.com), this system operates as follows:
The system as installed by Getaround in the vehicle enables the doors to be opened, by using the smartphone of the user. To this end the smartphone communicates through a short-distance wireless communication, e.g. Bluetooth, a code to a vehicle access system as it is installed in the vehicle by Getaround.

The code that is required to this end, is received by the smartphone from a central data-server, through a long-distance wireless communication (e.g. SMS, mobile or fixed Internet, ...)
Once the user has gained access to the vehicle, he uses the transponder key, available in the car, to start and use the car.

One of the drawbacks of this method is that in case of burglary in the car, the car can be started and stolen by means of the transponder key which is readily available in the car.

A similar system has been described in the French patent Nr. 9915248, Publication number 2 801 994, in the name of Renault Technocentre.
This document describes how access to a vehicle is granted to a user by means of its mobile, that communicates through a long-distance communication with a central database, and through a short-distance communication with the board management system of the vehicle. This access is granted to the user through the input of commands on the mobile of the user.
Once the user has gained access to the vehicle in the above manner, he needs to take the key present in the vehicle to start the vehicle. As an alternative, he can also start the vehicle by means of a push button (Page. 8, lines 6-9, as well as page. 11, lines 21-24).
It is self-evident that also this system has the drawback that in case of burglary into the car, the car can be started by means of the available key.

A system for the sharing of vehicles has been introduced in Belgium under the brand name Cambio. Contrary to the more traditional cases of car-renting whereby a command voucher needs to be completed each time a user wishes to rent a car, and the user is bound to the opening-hours of the rental company, only once a command voucher needs to be completed in the Cambio system. The user receives a chip card, granting him access 24/24 hours and 7/7 days to the vehicle park of Cambio.

The reservation of a car then can be effected by telephone or through the internet, and the user has the choice among the various types of cars of the rental company.
At the time of the reservation, the user receives a secret pin code, and in combination with the chip card he can then get the reserved car at the agreed place. Access to the car is gained on the basis of the data of the chip card and the user find the key to start the car, attached to the board computer in a cupboard of the car (use of the pin code).

This system is safe (alarm system) but it is difficult to install, it is expensive, there is need for network access, it interferes with the electronic system of the car, immobilisation of the car, ...
On top hereof the Cambio method has the disadvantage that the user needs to keep an additional chip card, besides the multiple credit and other cards that he already keeps in his wallet.

The aim of the present invention is to remedy the above and other problems.

### Summary of the invention:

The present inventors have developed a management system for the shared use of vehicles, the system comprising:
- a central data processing file;
- a control module installed in each vehicle managed by the system;
- a wireless communication apparatus of a user for wireless communication with the central data processing file and the control module;
- a key bit adapted to mechanically fit into a contact lock on a steering column of a vehicle and provided at an accessible location inside a passenger compartment of each vehicle managed by the system; and
- an intelligent key part provided in each vehicle managed by the system and comprising vehicle opening, vehicle closing and vehicle starting and stopping functionality,
wherein
- the intelligent key part comprises three elements, located on a printed circuit board of the intelligent key part:
   ∘ two elements for the central remote control of the vehicle, one for opening and one for closing the vehicle, and
   ∘ one transponder element for causing the vehicle to be ready for use by the user when the key bit is inserted in the contact lock and turned;
- the intelligent key part is incorporated into the control module;
- the control module further comprises means for wireless communication with the wireless communication apparatus of the user;
- the wireless communication apparatus of the user is adapted to download a virtual key from the central data processing file, the virtual key comprising an address of the means for wireless communication of the control module, an access or identification code and an authentication code;
- the wireless communication apparatus of the user is further adapted to transmit the virtual key to the means for wireless communication of the control module;
- the means for wireless communication of the control module are adapted to receive the virtual key and transmit it to the intelligent key part by a wired connection to the printed circuit board of the intelligent key part;
- the intelligent key part is adapted to steer its two elements for the central remote control of the vehicle on the basis of the access or identification code in the received virtual key, the steering being performed through wired connections running over its printed circuit board and causing said elements to open resp. close the vehicle; and
- the intelligent key part is further adapted to cause its transponder element to exchange an authentication with a motor management system of the vehicle on the basis of the received virtual key such that the vehicle is ready for being started or stopped when the key bit is inserted in the contact lock and turned.

According to a preferred embodiment of the invention, in the management system, the control module comprises two modules, one module having an optional global positioning chip, an optional battery, preferably a button battery, and the means for wireless communication, preferably Bluetooth communication, and the other module having the intelligent key part.

### Description

### Short description of the drawings:

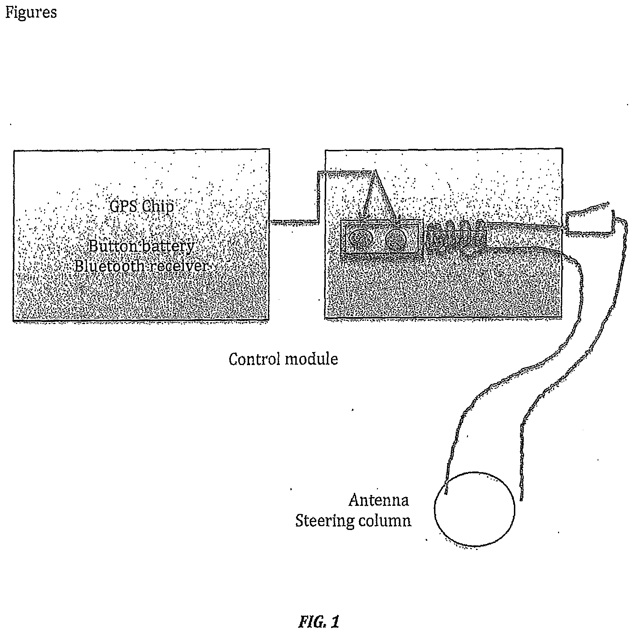

With the aim to illustrate more clearly the features of the invention, hereinafter, by way of example, figure 1 shows in a schematic manner the component parts of the control module of the vehicle, as these can be used in the present management system.

In this figure 1 the left rectangle shows a first part of the control module : this part contains the means for wireless communication, preferably a Bluetooth receiver, the optional global positioning chip, and an optional battery, for example a button-battery.

The latter ensures that the control module can operate independently and does not need to be fed by the electrical battery of the vehicle.

In case no battery is present in the control module, the latter is electrically fed by the battery of the vehicle.

The rectangle positioned at the right side shows how the steering electronics of the transponder key are incorporated in the control module: the two push buttons of the remote control (opening and closing function) are shown, as well as the transponder part of the key. These keep their usual functions, but according to the concept of the invention are steered by a wired connection from the Bluetooth receiver of the control module. This wired connection in practice can run from the module of the wireless communication of the control module to the Printed Circuit Board of the transponder key.

At the bottom of the figure the magnetic induction coil is shown, that is situated, in case a transponder key is used, around the steering column of the vehicle. This coil is connected through a wired connection with a coil wound around the transponder end of the transponder key, as shown on the figure.

This circuit is steered through a relay, shown at the right side of the rectangle shown at the right. The latter is also steered through a wired connection on the basis of the signals received from the Bluetooth receiver.

In Figure 1 the optional global positioning chip, the optional (button)battery and the Bluetooth receiver are shown in one module, the steering electronics of the transponder key are shown in another module.

The configuration makes it possible to position the module comprising the Bluetooth receiver optimally in view of the quality of the short-distance radio connection.

This however is not necessary, and both modules can be integrated in one and the same module.

### Detailed description

The functionality of a transponder key is used.

Although a transponder key is a known device for the person skilled in the art, the operating principle of such a transponder key is described in short hereinafter.

As from 1992 onwards, all new vehicles on the EU market comprise a transponder key. This type of key comprises a chip or steering electronics in its head that communicates with a computer comprised in the motor management system of the car.

Once access has been granted to the vehicle, the motor of the vehicle is started by using the transponder key in a conventional manner: the key bit of the key is inserted into the contact lock, is turned to the right or the left thereby unblocking the steering column, and so rendering the vehicle ready for use. When the key is further turned into the contact lock, the motor starts running. The unlocking of the steering column and starting of the motor only take place after a code has been exchanged between the transponder key and the motor management of the vehicle. This takes place by means of a magnetic induction coil, comprised in the steering column of the vehicle, around the contact lock.

Such a transponder key thus has in principle two functions: grant access to the vehicle to the user and to this end the chip function is commonly used; make the vehicle ready for use, or start the motor, and to this end the key bit function of the key is commonly used. In parallel to the turning of the key in the contact lock by means of the key bit, a signal is transmitted from the chip of the transponder key to the starting motor during the start, such that the motor effectively starts. In case this signal is not transmitted, the doors of the vehicle can be opened and the contact can be turned, but the motor will not start because the starter does not receive a signal from the transponder key.

According to the present management system, an apparatus for wireless communication, to be used by the user of the vehicle, is used as remote control of the transponder key, that is fixed or cemented in a control module of the vehicle. This control module is present in the vehicle, and is firmly connected thereto.

The transponder key as comprised in the control module does no longer physically contain a key element (key bit), only the 'intelligent' part or the steering electronics of the transponder key are used: the intelligent part is to be understood as that part of the transponder key wherein all functions are contained, apart from the physical unblocking of the steering column (this is the only function of the physical end of a transponder car key).

In case of a Keyless go car, the driver only needs to push the start/stop to start the car (the term start here means to activate, and this does not necessarily imply the actual start (turning) of the motor).

The big advantage is that by means of this system, the access and the easy of use of at least one car managed by the management system can be granted in a simple manner to various persons. On top hereof, the control module comprised in the management system can be mounted in the managed vehicle in a non-intrusive manner.

This means that no or a minimal intervention in the vehicle itself needs to take place.

The key is incorporated in the control module and is steered by the signals received by the Bluetooth receiver in the control module of the apparatus for wireless communication of the user (for example his smartphone), and that are transmitted through a connection to the key.

In such a case the transponder key comprises a key bit, this usually is a specially cut piece of metal, comprising bulges and holes that fit into the contact lock of the vehicle. This part of the key is used to unlock the mechanical locking of the steering column, when the key is turned right or left in the contact lock.

The key bit of the transponder key of the vehicle is mechanically separated from the steering electronics. So as to enable the user still to use the key bit in an easy manner, the key bit is firmly and fixedly connected to an element made up of for example hard plastic. In this way the user can position the key bit of the original transponder key in the contact lock of the vehicle, just like before, to unlock the mechanical security of the steering column.

Apart from the key bit as described hereinbefore, the transponder key also comprises steering electronics for a car. These steering electronics make up the so-called 'intelligent' part of the transponder key: by intelligent part should be understood that part of the transponder key comprising all functions, apart from the physical unlocking of the steering column + enabling the contact/starting (this is indeed the only function of the physical end part of the key bit of a transponder-car key).

These steering electronics comprise the following three elements.

Two elements comprise the central remote control to the car. These are commonly controlled by means of two pushbuttons on the transponder key: an 'open' pushbutton to open the central locking system of the car; a 'close' pushbutton to close the central locking system of the car. These functionalities are incorporated in an unaltered manner in the present management system: only the manner of actuating of the 'open' and 'close' pushbuttons on the key are changed in the manner as described hereinafter.

A third element is the actual transponder that is incorporated at the front part of the key, and that at the time of insertion of the key bit in the contact lock of the car, exchanges an authentication with the motor management system of the car.

The steering electronics of the transponder key as described above is retained in unaltered manner as to its functionality.

To this end it is incorporated in a separate control module that is placed in the vehicle.

This control module then also comprises means for wireless communication with an apparatus for wireless communication, at the disposal of the user of the vehicle.

The functionality of the steering electronics of the transponder key is then retained in this control module in its entirety; the various functions however now are not actuated by manually pressing the 'open' and 'close' buttons. These functions are actuated by means of signals transmitted from a smartphone of the user to the module that on its turn transmits these to that part of the car key that is incorporated in the module.

This apparatus for wireless communication of the user can e.g. be chosen from one of the apparatuses of the list mentioned hereinafter:
a laptop, a mobile phone or smartphone, a digital personal assistant (PDA), a notebook (optionally with touch screen), a netbook, a touchscreen (Tablet),... The term smartphone should be understood as an apparatus for mobile telephone communication with extended computing capabilities. A smartphone can also be considered as a hand-held computer or personal digital assistant (PDA) that at the same time is also a telephone. For simplicity of the description, the text as set forth hereinafter shall always refer to a smartphone as an example of such an apparatus for wireless communication of the user. It goes without saying that any of the apparatuses for wireless communication as set forth above can be used instead of a smartphone.

The smartphone communicates with the control module in the vehicle through a wireless communication network for data transmission.

This wireless communication can be based on various techniques. Often use is made of short distance radio connection such as for example Bluetooth. In principle use can also be made of alternative short-distance connections such as infrared communication techniques, or NFC (Near Field Communication).

Bluetooth is a technique for wireless data transmission over short distances up to approx. 10 meter.

Bluetooth is a registered trade mark of the Bluetooth Special Interest Group (SIG) Inc.

For various reasons use is made of Bluetooth to realise the wireless communication between the apparatus for wireless communication and the communication module.

Bluetooth can (for example compared to infrared connections) bridge larger distances, the connection with Bluetooth is quite easy as with most of the Bluetooth apparatuses a list can be requested as to what other Bluetooth enabled apparatuses are around, and hereupon the connection is easily made. Further Bluetooth is not linked to any specific brand, this having the advantage that nearly all mobile phones are able to communicate through Bluetooth with the control module that is incorporated in the vehicle.

For the sake of simplicity in the description that follows, reference shall always be made to Bluetooth as an example of such a wireless communication technique. However, it goes without saying that any of the above-mentioned wireless communication techniques can be used instead of Bluetooth.

In a first phase the apparatus for wireless communication of the user, preferably a smartphone, transmits preferably over Bluetooth to the control module present in the vehicle, data that comprise an access- or identification code, thereby opening the doors of the car for the driver/user.

In practical terms to this end, the control module comprises a built-in Bluetooth receiver that receives the data transmission from the smartphone of the user and that transmits same to the steering electronics of the transponder key that is incorporated in the control module.

Once the driver has taken its seat in the vehicle, and in case the vehicle is equipped with a transponder key comprising a key bit, the vehicle is ready for use as soon as the key bit in inserted into the contact lock of the vehicle. The key bit of the transponder key - as set forth supra - may comprise a handy element made up of hard plastic to simplify the insertion of the key bit in the contact lock.

The key bit with the handy plastic holding element is put in the car at the disposal of the user, and is preferably firmly linked by a steel wire to the vehicle by means of a screw connection.

As set forth supra the steering electronics, comprising the 'intelligent' part of the transponder key car, are incorporated in the control module of the vehicle. The wired connections between the control module and the 'open' and 'close' buttons, as well as the transponder itself, run over the printed circuit board of the transponder key.

In more concrete terms, this means that the smartphone preferably over Bluetooth transmits a signal to the control module of the car, thereby sending an electrical pulse to the chip of the transponder car key incorporated in the control module.

Because of this the car is ready for use for the user.

A characteristic feature thus resides in the fact that all functions of the transponder key are kept, but are actuated through the built-in control module wherein the steering electronics of the car key are incorporated, by a separated remote control, in practical terms the smartphone of the user.

The above implies that every user that has a smartphone at its disposal, gets access to the ease of use of the car, on condition that the necessary codes are loaded into its smartphone. The loading of these data takes place on the basis of a communication of the smartphone of the user with the central data processing files of the managing system of the service provider.

In practice these central data processing files of the service provider comprise one or more servers, or in a more simplified service, one or more personal computers.

The data relating to the users, as well as the data relating to the car park of the service provider, comprising e.g. the location of the cars, distances run, maintenance records, possible damage information, availability of the cars, etc. are stored herein.

Long-distance communication means are preferably used for the communication or the data exchange between the wireless communication device of the user, preferably a smartphone, and the central data processing file of the management system or the service provider. This long-distance communication preferably is realised by using the GSM network (e.g. in case of data exchange by means of SMS), the mobile or fixed internet.

This communication between the smartphone of the user and the central data processing files of the service provider in practice runs as follows.

The user downloads the mobile application as this is provided by the service provider through the mobile or fixed internet, as a usual iOS or Android application.

As soon as this application has been downloaded on the smartphone of the user, the user can consult the virtual key by means of this application.

This virtual key is depending on a certain kind of car and a reservation time.

It comprises amongst other elements the following encrypted information:
1. the address of the means for mobile communication, comprised in the control module of the vehicle;
2. an authentication code;
3. a personal identification code.

On the basis of these data the user can at the agreed location and timing go to the car and use same (open/close/start).

An important part of the present system is the control module present in the car, and preferably incorporated in same.

The steering electronics of the transponder key are cemented in a resin together with the means for wireless communication, and the global positioning system.

To this end it suffices that the elements as described above are placed in a container or housing, whereupon this housing is filled with a thermo hardable resin. Preferably a resin is used that can be hardened by low temperatures, thereby preventing damage to the electronic components.

After hardening of the entire set, the complete electronics of the control module are safeguarded and ready for use in the application at hand.

In this housing the Bluetooth receiver is also incorporated to receive the signals of the smartphone of the user, and transmit same to the steering electronics of the transponder key of the car.

A substantive advantage resides in the enhanced security against burglary or possible vandalism of the vehicle that is managed by the service provider.

Contrary to solutions for the renting of cars or sharing of cars as described in the prior art, the application of the present management system in use does prevent theft of the vehicles in case of burglary.

As the burglar does not have the necessary identification or authentication codes of the car, he cannot use such car.

The advantage for the user resides in the fact that he does not need to have an additional chip card to safely make use of this service.

It suffices to use the smartphone (or any equivalent wireless communication device, as set forth supra). By means of the access/identification or authentication codes that he downloaded from the central data processing files of the service provider, he gets access to the car as selected, and this car simply is ready to use and start by exchanging the appropriate codes between his smartphone and the control module present, and preferably fixedly incorporated in the vehicle.

An important characteristic, as set forth supra, is the operative connection between the control module and the steering electronics of a transponder access key of the car. The original transponder key of the car thus retains in a substantive manner its specific functions in the system and the method according to the present invention.

The unexpected advantage of the management system is that by the incorporation of the transponder key of the car in such a control module, this transponder key actually retains its usual functions and operation. The only difference is that it has been incorporated in a control module specially designed to this end in the car, and by doing so can be actuated by an external device for wireless communication.

The functions of the transponder key, namely the opening and closing of the doors of the vehicle to grant access to the user to the vehicle, remain unchanged. Only, these are not actuated by directly pressing the opening- and closing-buttons on the transponder key, but because the user presses or touches (in case of a touch screen) the corresponding command's on a device for wireless communication.

This device for wireless communication then transmits through wireless communication signals to the control module of the vehicle, that on its turn transmits these by means of the built-in steering electronics of the transponder key to the car management system.

In the management system the function and operation of the usual transponder key of the vehicle is retained by incorporating same in a control module connected to the vehicle, and actuating its functionality through a device for wireless communication that the user has at its disposal. The transponder key that is actuated in this way by the user (via its smartphone) will, by the fact of its incorporation in the control module, retain its usual operational functions, as the granting of access to the vehicle and the making ready of use of the vehicle.

In this case the various commands for the various car functions (such as opening, closing of the vehicle, starting, operations of the rear mirrors,...) are directly transmitted from a keyless entry remote to the control system of the car, and not over a control module wherein the transponder key of the vehicle is incorporate as 'intermediate element'.

The technology as described hereinabove can be used for various applications, and so is not limited to the making accessible of vehicles for an authorised user, or multiple authorised users.

The system can be used for example to grant access to a user to a housing, a boat, or similar objects.

To that end it suffices to adequately transfer the above described functionality to the desired application. The term 'vehicle' as used in the claims and the description of the present invention, should consequently be understood as comprising all kinds of vehicles as cars for personal or professional use, trucks, trailers, busses, boats, aeroplanes, or the like.

It can likewise be used to grant access to various users to for example housings, as well for permanent as temporary use, like vacation homes.

A special application resides in the locking or unlocking of a parking place by means of automatically controlled parking locks.

Such parking locks are available in a mechanical version, whereby the lock is operated by means of a traditional mechanical key.

It is also available in an electrically driven version, whereby the electric motor is for example actuated by means of a transponder key.

The intelligent part of the transponder key is than incorporated in the electrical steering part itself, and is fixedly connected to the parking lock. The actuation hereof is performed in a manner similar to the method described supra, namely by transmitting signals sent by e.g. a Bluetooth connection of the user. To that end the authorised user has previously downloaded the required codes through a communication with the server of the service provider of the parking locks.

In such a manner the parking lock can be shared by various persons on the basis of mutual agreements. It suffices to that end that in the smartphones of the authorised users of the parking space the required authorisation codes are stored, so as to actuate the electrical operation of the parking lock.

## Claims

1. Management system for the shared use of vehicles, the system comprising:
• a central data processing file;
• a control module installed in each vehicle managed by the system;
• a wireless communication apparatus of a user for wireless communication with the central data processing file and the control module;
• a key bit adapted to mechanically fit into a contact lock on a steering column of a vehicle and provided at an accessible location inside a passenger compartment of each vehicle managed by the system; and
• an intelligent key part provided in each vehicle managed by the system and comprising vehicle opening, vehicle closing and vehicle starting and stopping functionality,
wherein
• the intelligent key part comprises three elements located on a printed circuit board of the intelligent key part:
∘ two elements for the central remote control of the vehicle, one for opening and one for closing the vehicle, and
∘ one transponder element for causing the vehicle to be ready for use by the user when the key bit is inserted in the contact lock and turned;
• the intelligent key part is incorporated into the control module;
• the control module further comprises means for wireless communication with the wireless communication apparatus of the user;
• the wireless communication apparatus of the user is adapted to download a virtual key from the central data processing file, the virtual key comprising an address of the means for wireless communication of the control module, an access or identification code and an authentication code;
• the wireless communication apparatus of the user is further adapted to transmit the virtual key to the means for wireless communication of the control module;
• the means for wireless communication of the control module are adapted to receive the virtual key and transmit it to the intelligent key part by a wired connection to the printed circuit board of the intelligent key part;
• the intelligent key part is adapted to steer its two elements for the central remote control of the vehicle on the basis of the access or identification code in the received virtual key, the steering being performed through wired connections running over its printed circuit board and causing said elements to open resp. close the vehicle; and
• the intelligent key part is further adapted to cause its transponder element to exchange an authentication with a motor management system of the vehicle on the basis of the received virtual key such that the vehicle is ready for being started or stopped when the key bit is inserted in the contact lock and turned.

2. Management system according to claim 1, wherein the control module comprises two modules, one module having an optional global positioning chip, an optional battery, preferably a button battery, and the means for wireless communication, preferably Bluetooth communication, and the other module having the intelligent key part.

## Patentansprüche

1. Verwaltungssystem für die gemeinsame Nutzung von Fahrzeugen, wobei das System umfasst:
- eine zentrale Datenverarbeitungsdatei;
- ein Steuermodul, das in jedem von dem System verwalteten Fahrzeug installiert ist;
- ein drahtloses Kommunikationsgerät eines Benutzers zur drahtlosen Kommunikation mit der zentralen Datenverarbeitungsdatei und dem Steuermodul;
- einen Schlüsselbart, der geeignet ist, mechanisch in ein Kontaktschloss an einer Lenksäule eines Fahrzeugs zu passen, und der an einer zugänglichen Stelle innerhalb eines Fahrgastraums jedes vom System verwalteten Fahrzeugs vorgesehen ist; und
- ein intelligentes Schlüsselteil, das in jedem von dem System verwalteten Fahrzeug vorgesehen ist und eine Fahrzeugöffnungs-, Fahrzeugschließ- und Fahrzeugstart- und -stoppfunktionalität umfasst,
wobei
- das intelligente Schlüsselteil drei Elemente umfasst, die sich auf einer gedruckten Leiterplatte des intelligenten Schlüsselteils befinden:
o zwei Elemente für die zentrale Fernsteuerung des Fahrzeugs, eines zum Öffnen und eines zum Schließen des Fahrzeugs, und
o ein Transponderelement, um das Fahrzeug für den Benutzer betriebsbereit zu machen, wenn der Schlüsselbart in das Kontaktschloss eingeführt und gedreht wird;
- der intelligente Schlüsselteil in das Steuermodul eingebaut ist;
- das Steuermodul weiterhin Mittel zur drahtlosen Kommunikation mit der drahtlosen Kommunikationsvorrichtung des Benutzers umfasst;
- die drahtlose Kommunikationsvorrichtung des Benutzers angepasst ist, um einen virtuellen Schlüssel von der zentralen Datenverarbeitungsdatei herunterzuladen, wobei der virtuelle Schlüssel eine Adresse der Mittel zur drahtlosen Kommunikation des Steuermoduls, einen Zugangs- oder Identifikationscode und einen Authentifizierungscode umfasst;
- das drahtlose Kommunikationsgerät des Benutzers ferner dazu eingerichtet ist, den virtuellen Schlüssel an die Mittel zur drahtlosen Kommunikation des Steuermoduls zu übertragen;
- die Mittel zur drahtlosen Kommunikation des Steuermoduls angepasst sind, um den virtuellen Schlüssel zu empfangen und an das intelligente Schlüsselteil durch eine verdrahtete Verbindung mit der Leiterplatte des intelligenten Schlüsselteils zu übertragen;
- das intelligente Schlüsselteil dazu eingerichtet ist, seine beiden Elemente für die zentrale Fernsteuerung des Fahrzeugs auf der Grundlage des Zugangs- oder Identifikationscodes in dem empfangenen virtuellen Schlüssel zu steuern, wobei die Steuerung durch drahtgebundene Verbindungen erfolgt, die über seine Leiterplatte laufen und bewirken, dass die Elemente das Fahrzeug öffnen bzw. schließen; und
- das intelligente Schlüsselteil ferner dazu eingerichtet ist, sein Transponderelement zu veranlassen, auf der Grundlage des empfangenen virtuellen Schlüssels eine Authentifizierung mit einem Motormanagementsystem des Fahrzeugs auszutauschen, so dass das Fahrzeug zum Starten oder Anhalten bereit ist, wenn der Schlüsselbart in das Kontaktschloss eingeführt und gedreht wird.

2. Managementsystem nach Anspruch 1, wobei das Steuermodul zwei Module umfasst, wobei ein Modul einen optionalen globalen Positionierungschip, eine optionale Batterie, vorzugsweise eine Knopfbatterie, und die Mittel zur drahtlosen Kommunikation, vorzugsweise Bluetooth-Kommunikation, aufweist, und das andere Modul den intelligenten Schlüsselteil aufweist.

## Revendications

1. **Système** de gestion pour l'usage partagé de véhicules, le système comprenant:
- un fichier central pour le traitement de données ;
- un module de contrôle installé dans chaque véhicule géré par le système ;
- un appareil de communication sans fil d'un utilisateur afin de communiquer sans fil avec le fichier central pour le traitement de données et le module de contrôle ;
- un panneton de clé adapté pour bien aller mécaniquement dans une serrure de contact dans une colonne de guidage d'un véhicule et à disposition dans un endroit accessible dans un compartiment passager de chaque véhicule géré par le système ; et
- une partie intelligente de la clé disponible dans chaque véhicule géré par le système et comprenant une fonctionnalité pour l'ouverture et la fermeture du véhicule et pour le démarrage et l'arrêt du véhicule,
dans lequel
- la partie intelligente de la clé comprend trois éléments incorporés dans un circuit imprimé de la partie intelligente de la clé;
o deux éléments pour le contrôle central à distance du véhicule, un élément pour ouvrir et un élément pour fermer le véhicule et
o un élément transpondeur pour causer le véhicule pour être prêt pour l'usage par l'utilisateur quand le panneton de clé est inséré dans la serrure de contact et est tourné ;
- la partie intelligente de la clé est incorporée dans le module de contrôle ;
- le module de contrôle comprend en plus un moyen pour la communication sans fil avec l'appareil de communication sans fil de l'utilisateur ;
- l'appareil de communication sans fil de l'utilisateur est adapté pour télécharger une clé virtuelle du fichier central pour le traitement de données, la clé virtuelle comprenant une adresse du moyen de communication sans fil du module de contrôle, un code d'accès ou d'identification et un code d'authentification ;
- l'appareil de communication sans fil de l'utilisateur ensuite est adapté pour transmettre la clé virtuelle au moyen de communication sans fil du module de contrôle ;
- les moyens pour communication sans fil du module de contrôle sont adaptés pour recevoir la clé virtuelle et pour le transmettre à la partie intelligente de la clé par une connexion câblée au circuit imprimé de la partie intelligente de la clé ;
- la partie intelligente de la clé est adaptée pour diriger ces deux éléments pour le contrôle central à distance du véhicule sur la base du code d'accès ou d'identification dans la clé virtuelle telle que reçu, la direction étant effectuée par des connections câblées passant par le circuit imprimé et causant lesdits éléments à ouvrir respectivement fermer le véhicule ; et
- la partie intelligente de la clé est adaptée en plus afin de causer son élément transpondeur à échanger une authentification avec le système gestion moteur du véhicule sur la base d'une clé virtuelle reçue de telle façon que le véhicule est prêt pour être démarré ou arrêté quand le panneton de clé est inséré dans la serrure de contact et est tourné.

2. Système de gestion selon la revendication 1 dans lequel le module de contrôle comprend deux modules, un module comprenant une puce de positionnement global optionnelle, une batterie optionnelle, de préférence une batterie de bouton, et le moyen de communication sans fil, de préférence une communication par bluetooth, et l'autre module comprenant la partie intelligente de la clé.
